# NEUE EUROPÄISCHE PATENTSCHRIFT

(11) **EP 3 477 265 B2**
(45) Veröffentlichungstag und Bekanntmachung des Hinweises auf die Entscheidung über den Einspruch: **27.11.2024**
(45) Hinweis auf die Patenterteilung: 27.11.2019
(21) Anmeldenummer: 17197987.5
(22) Anmeldetag: 24.10.2017
(51) Int. Cl.: G01F 1/075, G01F 15/00

(54) **DURCHFLUSSMESSER**
FLOW METER
DÉBITMÈTRE

(43) Veröffentlichungstag der Anmeldung: 01.05.2019
(73) Patentinhaber: Engelmann Sensor GmbH, 69168 Wiesloch-Baiertal (DE)
(72) Erfinder: STUREK, Robert, 69242 Mühlhausen (DE); NIEDERMAYER, Manuel, 69242 Mühlhausen-Rettigheim (DE)
(74) Vertreter: Durm Patentanwälte PartG mbB

(56) Entgegenhaltungen:
- WO-A1-02/12836
- DE-A1- 102008 038 955
- DE-A1- 102008 038 955
- DE-A1- 102009 048 612
- DE-A1- 102010 055 752
- DE-A1- 102010 055 752
- DE-A1- 19 745 236
- DE-A1- 19 745 236
- DE-U1- 29 611 212
- DE-U1- 29 611 212
- GB-A- 2 085 598
- GB-A- 2 085 598
- "TITAN (ELEMENT)", CHEMIE-LEXIKON, Retrieved from the Internet <URL:HTPP://www.chemie.de/lexikon/Titan_(Eiement).html>

## Beschreibung

Die Erfindung betrifft einen Durchflussmesser. Solche Durchflussmesser dienen der Erfassung des Volumenstroms eines Fluids und finden bevorzugt Einsatz bei Wärmezählern. Aus dem Volumen des Fluids und dem Temperaturunterschied zwischen Vorlauf und Rücklauf kann die in einem Objekt verbrauchte Wärmemenge bestimmt werden.

Das Flügelrad wird von dem strömenden Fluid, zum Beispiel Heizungswasser, direkt angetrieben. Die Anzahl von Umdrehungen pro Zeiteinheit wird mittels einer Spule abgetastet. Die Abtastspule ist Teil eines elektrischen Schwingkreises, dessen Schwingung durch das auf dem Flügelrad sitzende Modulatorsegment periodisch gedämpft wird, wenn nämlich das aus elektrisch gut leitfähigem Material bestehende Modulatorsegment das Magnetfeld der Abtastspule durchfährt, wobei in dem Modulatorsegment Wirbelströme induziert werden.

Die Abtastspule befindet sich außerhalb der Messkammer, sodass sie mit dem Fluid nicht in Berührung kommen. Dagegen läuft das Flügelrad in der Messkammer, die von dem Fluid durchflossen wird. Das Flügelrad besteht üblicherweise aus Kunststoff, so dass es gegen die meisten Fluide, insbesondere Wasser, weitgehend unempfindlich ist. Das Modulatorsegment muss dagegen aus einem gut leitfähigen Metall sein, sodass die Gefahr von Korrosion bei Kontakt mit dem strömenden Fluid besteht.

Ein weiteres Problem liegt darin, dass elektrisch gut leitfähige Metalle erheblich schwerer sind als das Kunststoffmaterial, aus dem das Flügelrad gefertigt ist. Es muss also darauf geachtet werden, dass keine Unwuchten auftreten. Eine mögliche Lösung besteht darin, mehr als ein Modulatorsegment rotationssymmetrisch auf dem Flügelrad anzuordnen. In diesem Fall werden pro Umdrehung mehrere Zählimpulse erzeugt, was einen entsprechenden Mehraufwand bei der Auswertelektronik erfordert.

Die Induktion der Wirbelströme, die in dem unter der Abtastspule vorbeidrehenden Modulatorsegment erzeugt werden, ist proportional dem elektrischen Widerstand des Modulatorsegments. Korrosion an der Oberfläche würde den Widerstand verringern und damit zu Messfehlern oder zumindest zu einer verringerten Empfindlichkeit der Messapparatur führen. Auch eine Veränderung des Gewichts des Modulatorsegments im Laufe der Einsatzzeit des Durchflussmessers muss unter allen Umständen vermieden werden.

Um nun das Modulatorsegment gegen negative Einflüsse des strömenden Fluids zu schützen, kommen grundsätzlich zwei Maßnahmen in Betracht: Entweder die Einkapselung des Modulatorsegments, sodass ein Kontakt mit dem Fluid ausgeschlossen wird, oder die Verwendung eines korrosionsresistenten Materials.

DE 10 2010 055 752 offenbart einen mechanischen Durchflusszähler mit einem Flügelrad, an dessen Oberseite sich eine nierenförmige Geberschicht befindet, welche von dem Spritzgießmaterial des Flügelradkörpers umspritzt sich im Innern des Flügelradkörpers befindet. Die Geberschicht besteht zum Beispiel aus CU, AG, PT oder AU und hat eine Schichtdicke von 5 bis 10 µm.

DE 10 2008 038 955 beschreibt eine kreisförmige Modulatorscheibe für einen Flügelradzähler. Die Modulatorscheibe besteht aus zwei miteinander verbundenen Kunststofffolien, zwischen denen eine dünne Metallschicht vorgesehen ist, welche nur einen Teilabschnitt der beiden angrenzenden Kunststofffolien belegt. Kunststofffolien und Metallfolie sind miteinander verklebt. Die Metallfolie besteht üblicherweise aus Kupfer, Silber oder Gold und hat eine Dicke von höchstens 20 µm.

DE 296 11 212 beschreibt einen Flügelrad-Wasserzähler mit halbkreisförmiger Modulatorscheibe, die eine Sektorbeschichtung aus Metall wie zum Beispiel Gold-, Kupfer- oder Silber-Palladium aufweist.

DE 20 2006 005 401 U beschreibt einen Durchflusssensor mit Flügelrad, das an seiner Oberseite ein Modulatorblech trägt, welches als gewickelter Metallkeil aus Kupfer ausgebildet ist.

DE 43 11 398 beschreibt ein Flügelrad für Durchflussmesser mit einem impulsgebenden Element, welches zum Beispiel als Magnete, Ferritkerne oder dergleichen ausgebildet ist. Die Gefahr der Korrosion der impulsgebenden Elemente soll dadurch gelöst werden, dass diese Elemente dauerhaft hermetisch abgeschlossen untergebracht sind, insbesondere mit Kunststoffmaterial umspritzt sind.

Modulatorsegmente, die aus sehr dünnen Metallschichten bestehen, bewirken nur eine relativ schwache Rückkopplung auf den elektrischen Schwingkreis der Sensoreinrichtung. Die flüssigkeitsdichte Einbettung und/oder Beschichtung des Geberelements mit korrosionsbeständigen Materialien ist technisch aufwendig. Gold oder Platin sind zwar korrosionsresistent und besitzen sehr gute elektrische Leitfähigkeit, sind aber extrem teure Materialien und haben hohes spezifisches Gewicht, was die Auswuchtung des Flügelrads erschwert.

Das technische Problem besteht also darin, einen verbesserten Durchflusssensor zu gestalten, der sich durch möglichst kleine Baugröße, hohe und über lange Zeit konstante Messgenauigkeit, Unempfindlichkeit gegenüber chemisch aggressiven Fluiden sowie eine kostengünstige Herstellbarkeit auszeichnet.

Gelöst wird die Aufgabe durch einen Durchflussmesser mit den in Patentanspruch 1 angegebenen Merkmalen.

Titan als technischer Werkstoff hat bekanntlich herausragende mechanische Eigenschaften, nämlich hohe spezifische Festigkeit, das heißt sehr günstiges Verhältnis von Festigkeit und Masse. Das spezifische Gewicht liegt bei nur 4,5 g/cm³. Darüber hinaus zeichnet sich Titan durch eine hervorragende Korrosionsbeständigkeit, auch und gerade im aggressiven Milieu aus. Als Folge der hohen Sauerstoffaffinität entsteht an der Oberfläche von reinem Titan schon unter atmosphärischen Bedingungen und insbesondere in wässrigem Milieu innerhalb kürzester Zeit eine dünne oxidische Deckschicht, die sehr dicht und elektrisch nichtleitend ist. Diese Deckschicht passiviert die metallische Oberfläche und verhindert elektrochemische Reaktionen mit dem umgebenden Milieu; sie ist aber so dünn, dass sie keinen nennenswerten Einfluss auf die Dämpfungswirkung hat.

Für den vorliegenden Einsatzzweck, nämlich als Material für das Modulatorsegment des Flügelrads, ist aber auch die relativ hohe spezifische Leitfähigkeit von Vorteil. Mit 2,56 x 10⁶ S/m liegt die elektrische Leitfähigkeit von reinem Titan fast doppelt so hoch wie die Leitfähigkeit von Edelstahl. Auch der Wärmeausdehnungsbeiwert von nur 8,7 x 10⁻⁶ • K⁻¹ liegt etwa um den Faktor 2 günstiger als der von Edelstahl.

Insgesamt hat sich die Ausbildung des Modulatorsegments aus einem Stück ebenen blanken Blech als überraschend vorteilhaft erwiesen: Erheblich leichter und leitfähiger als Edelstahl, gleichzeitig aber um ein Vielfaches korrosionsbeständiger und stabil, dabei ebenso leicht verarbeitbar wie Edelstahl und, nicht zuletzt, um ein Vielfaches billiger als etwa Gold.

Aufgrund der relativen Leichtigkeit von Titan lässt sich das Modulatorsegment kleiner ausbilden, ohne dass es zu schwer beherrschbaren Unwuchten des schnell drehenden Flügelrads oder einer Verkantung um die Lagerachse infolge einseitigen Aufschwimmens kommt. Jedoch erzeugt das erfindungsgemäß ausgebildete Modulatorsegment eine hohe und somit gut detektierbare Dämpfung des Schwingkreises der Sensoreinrichtung, da das Magnetfeld der Abtastspule ausreichend hohe Wirbelströme im Titanblech induziert. Fertigung und Montage des Geberelements aus stabilem Titanblech ist ebenso einfach wie zum Beispiel ein vergleichbares Element aus massivem Edelstahl.

Da das Modulatorsegment erfindungsgemäß aus einem Stück Blech mit einer bevorzugten Dicke von ca. 0,1 mm besteht, ist es von Vorteil, wenn an der Oberseite des Flügelrads eine entsprechende flache Vertiefung ausgebildet ist, in welcher das Modulatorsegment sitzt. Die Befestigung erfolgt vorzugsweise durch teilweises Umspritzen des Randes des Blechteils, wobei auch hier die günstigen mechanischen Eigenschaften des verwendeten Materials, insbesondere Festigkeit, Temperaturbeständigkeit und nicht zu hoher Wärmeausdehnungsbeiwert, die Herstellung des Flügelrads begünstigt. Das Titan-Blechteil kann einfach in die Spritzgießform eingelegt und mit thermoplastischem Kunststoff umspritzt werden.

Bei einer bevorzugten Ausführungsform ist das Modulatorsegment halbkreisförmig ausgebildet, wobei der Halbkreis konzentrisch zur Drehachse des Flügelrads angeordnet ist. Gegenüber einem gleichgroßen Modulatorsegment aus Edelstahl hat das Titanblech eine erheblich größere Dämpfungswirkung infolge der höheren elektrischen Leitfähigkeit, ist aber gleichzeitig um fast die Hälfte leichter als ein gleichgroßes Segment aus Edelstahl. Dies führt zu einer ausgeglicheneren Gewichtsverteilung bzw. einem gleichmäßigeren Aufschwimmverhalten des im Fluidbad laufenden Flügelrads.

Aufgrund der vergleichsweise höheren Dämpfungswirkung des aus Titanblech bestehenden Modulatorsegments kann die mindestens eine Abtastspule kleiner ausgeführt werden, insbesondere kleineren Durchmesser haben. Dadurch wird es möglich, zwei zylinderförmige Abtastspulen parallel nebeneinander mit gegenseitigem Abstand auf einem zur Drehachse des Flügelrads konzentrischen Kreis anzuordnen. Eine so ausgestaltete Sensoreinrichtung liefert zwei drehwinkelabhängige Impulse je Umdrehung des Flügelrads in kleinem zeitlichen Abstand, sodass nicht nur die Anzahl der Umdrehungen pro Zeiteinheit gezählt werden kann, sondern auch die Drehrichtung erfassbar ist. Der zur Verfügung stehende knappe Bauraum in der über der Messkammer liegenden Messkapsel lässt sich dadurch besser ausnutzen. Als besonders günstig hat sich ein Größenverhältnis erwiesen, bei dem der Durchmesser der Abtastspulen zwischen 50 und 75 Prozent des Radius des Flügelrads beträgt. Die beiden Abtastspulen sind vorzugsweise um 90 Grad gegeneinander versetzt angeordnet.

Ein Ausführungsbeispiel des erfindungsgemäßen Durchflussmessers wird nachstehend anhand der beigefügten Abbildungen näher beschrieben. Es zeigen:
- Figur 1a: einen Durchflussmesser in Seitenansicht, teilweise vertikal geschnitten;
- Figur 1b: einen Ausschnitt des Vertikalschnitts von Figur 1, vergrößert;
- Figur 2a: den Durchflussmesser von Figur 1a, horizontal geschnitten;
- Figur 2b: einen Ausschnitt des Horizontalschnitts von Figur 2a, vergrößert;
- Figur 3: das Flügelrad des Durchflussmessers von Figur 1a, perspektivisch;
- Figur 4a: das Messprinzip, stark vereinfacht;
- Figur 4b: Schwingungsverlauf ohne Dämpfung;
- Figur 4c: Schwingungsverlauf mit Dämpfung.

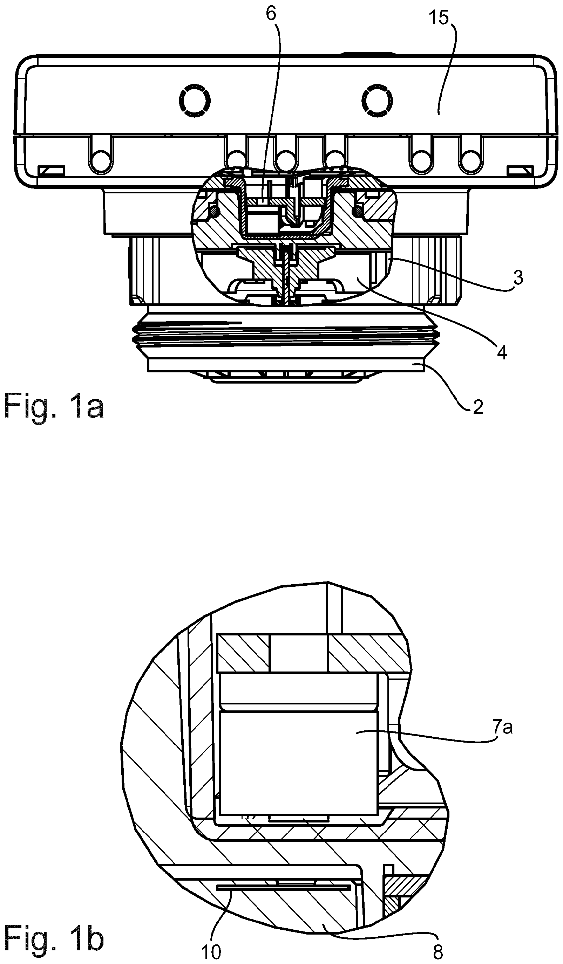

Der in Figur 1a ungefähr in natürlicher Größe dargestellte Durchflussmesser hat ein rundes Gehäuse 1 mit einem Schraubanschluss 2 zum Aufschrauben auf eine (nicht dargestellte) Rohrleitung beispielsweise eines Heizkreislaufs. In dem Gehäuse 1 ist eine runde Messkammer 3 ausgebildet, die von dem Heizwasser durchflossen wird. In der Messkammer 3 ist ein Flügelrad 4 um eine vertikale Drehachse 5 drehbar gelagert. Das Flügelrad 4 wird von dem die Messkammer 3 durchströmenden Fluid (Heizwasser) in Drehung versetzt, wobei die Drehgeschwindigkeit des Flügelrads 4 ein Maß für den Volumenstrom ist.

Über der Messkammer 3 und von dieser Flüssigkeit dicht getrennt befindet sich eine Messkapsel 6 mit einer elektronischen Sensoreinrichtung, die zwei Abtastspulen 7a, 7b umfasst. Die Abtastspulen 7a, 7b sind jeweils Teil eines elektrischen LC-Schwingkreises und bauen ein periodisch schwankendes Magnetfeld auf, dessen magnetische Feldlinien von oben in die Messkammer 3 hineinreichen.

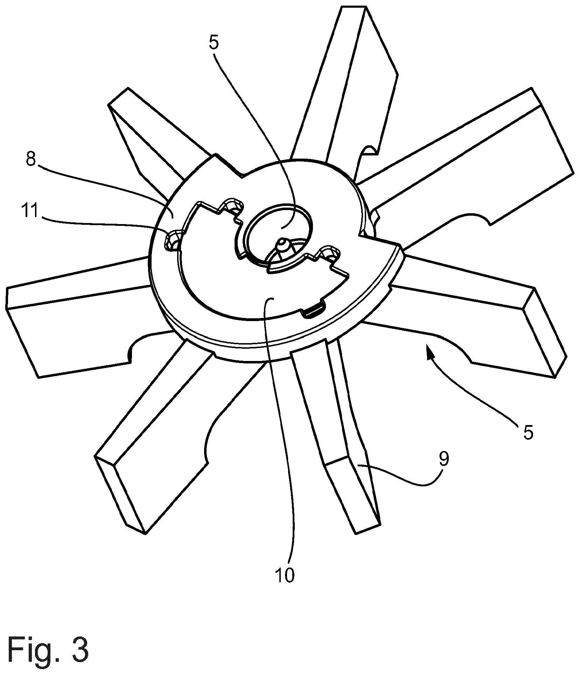

Das in Figur 3 separat dargestellte Flügelrad 4 hat eine flache Nabe 8 und von dieser radial nach außen weisende Flügel 9. Das Flügelrad 4 ist aus Kunststoff spritzgegossen. An der Oberseite der Nabe 8 sitzt ein Modulatorsegment 10, das halbkreisförmig ausgebildet ist und konzentrisch zur Achse 5 angeordnet ist. Das Modulatorsegment 10 sitzt in einer flachen Vertiefung an der Oberseite der Nabe 8 des Flügelrads 9. Das Modulatorsegment 10 ist ein Stück ebenes blankes Blech aus reinem Titan mit dem Reinheitsgrad 2 (99,7 %). Die Ränder des Modulatorsegments 10 sind teilweise mit dem Kunststoff des Flügelrads 4 umspritzt.

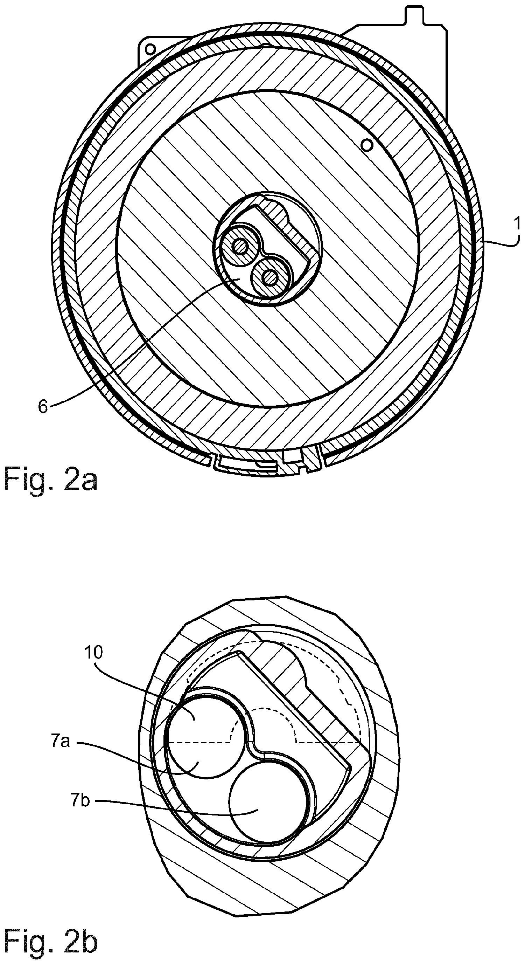

Wie insbesondere aus Figur 2b ersichtlich, sind die beiden zylinderförmigen Abtastspulen 7a, 7b parallel nebeneinander und mit gegenseitigem Abstand auf einem zur Drehachse 5 des Flügelrads 4 konzentrischen Kreis angeordnet. Die Durchmesser der Abtastspulen 7a, 7b betragen rund 70 Prozent des Radius des Flügelrads 4. Das in Figur 2b mit gestrichelter Linie angedeutete Modulatorsegment 10 schneidet die Achsen der Abtastspulen 7a, 7b rechtwinklig und durchfährt die von den Abtastspulen 7a, 7b erzeugten Magnetfelder nacheinander.

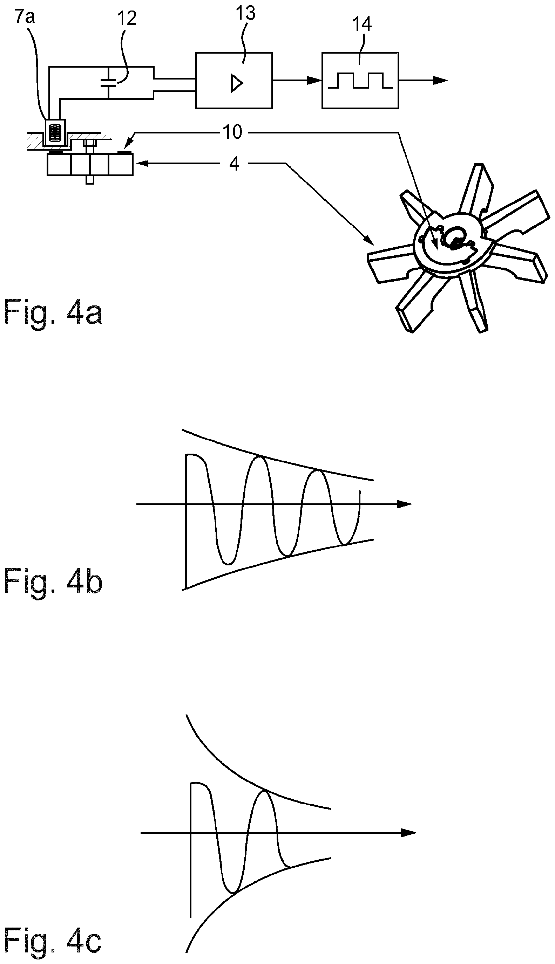

Figur 4 erläutert das Messprinzip, wobei der Einfachheit halber hier nur eine Abtastspule 7a dargestellt ist. Diese Abtastspule 7a ist Teil eines elektrischen LC-Schwingkreises umfassend einen Kondensator 12 und die Abtastspule 7a. Bei Drehung des Flügelrads 4 induziert das Magnetfeld der Abtastspule 7a Wirbelströme in dem auf dem Flügelrad 4 sitzenden Modulatorsegment 10, sobald dieses die magnetischen Feldlinien der Abtastspule 7a schneidet. Dadurch kommt es zu einer drehwinkelabhängigen Dämpfung des Schwingkreises. Figur 4b zeigt eine ungedämpfte Schwingung, Figur 4c den Verlauf der durch das Modulatorsegment 10 gedämpfte Schwingung. Die periodischen Schwingungsdämpfungen werden durch eine Abtastelektronik 13 erfasst und von einem Impulszähler gezählt. Auf diese Weise lässt sich die Drehzahl ebenso wie auch die Drehrichtung des Flügelrads 4 sehr genau erfassen und damit den durch die Messkammer 3 strömenden Volumenstrom des Heizwassers messen. Das Signal des Impulszählers 14 wird einem Rechenwerk 15 zugeführt, das auf dem Gehäuse 1 des Durchflussmessers sitzt (vgl. Figur 1a).

### Bezugszeichen

- 1: Gehäuse
- 2: Schraubanschluss
- 3: Messkammer
- 4: Flügelrad
- 5: Drehachse (Flügelrad)
- 6: Messkapsel
- 7a, 7b: Abtastspule
- 8: Nabe (Flügelrad)
- 9: Flügel (Flügelrad)
- 10: Modulatorsegment
- 11: Vertiefung (Nabe)
- 12: Kondensator
- 13: Abtastelektronik
- 14: Impulszähler
- 15: Rechenwerk

## Patentansprüche

1. Durchflussmesser mit
einer Messkammer (3), die von einem Fluid durchflossen wird,
einem in der Messkammer (3) drehbar gelagerten Flügelrad (4), das von dem strömenden Fluid angetrieben wird,
einer Sensoreinrichtung mit einem elektrischen Schwingkreis, der wenigstens eine Abtastspule (7a) enthält,
mindestens einem Modulatorsegment, das auf der Nabe (8) des Flügelrads (4) angeordnet ist und in Abhängigkeit des Drehwinkels eine Dämpfung des Schwingkreises induziert,
wobei das Modulatorsegment (10) ein Stück ebenes blankes Blech aus reinem Titan ist,
wobei die Sensoreinrichtung zwei zylinderförmige Abtastspulen (7a, 7b) umfasst, welche parallel nebeneinander und mit gegenseitigem Abstand auf einem zur Drehachse (5) des Flügelrads (4) konzentrischen Kreis angeordnet sind,
wobei der Durchmesser der Abtastspulen (7a, 7b) zwischen 50 und 75 Prozent des Radius des Flügelrads (4) beträgt.

2. Durchflussmesser nach Anspruch 1, **dadurch gekennzeichnet, dass** das Modulatorsegment (10) aus Titan-Blech mit einer Dicke von 0,08 bis 0,50 mm, vorzugsweise ungefähr 0,1 mm besteht.

3. Durchflussmesser nach einem der vorhergehenden Ansprüche, **dadurch gekennzeichnet, dass** das Modulatorsegment (10) in einer flachen Vertiefung (11) an der Oberseite des Flügelrads (4) sitzt.

4. Durchflussmesser nach einem der vorstehenden Ansprüche, **dadurch gekennzeichnet, dass** das Modulatorsegment (10) halbkreisförmig konzentrisch zur Drehachse (5) des Flügelrads (4) ausgebildet ist.

## Claims

1. Flowmeter comprising
a measuring chamber (3) through which a fluid flows,
an impeller (4) which is rotatably mounted in the measuring chamber (3) and is driven by the flowing fluid,
a sensor device having an electrical resonant circuit containing at least one sensing coil (7a),
at least one modulator segment which is arranged on the hub (8) of the impeller (4) and induces damping of the resonant circuit on the basis of the angle of rotation,
whereby the modulator segment (10) is a piece of flat, blank sheet metal made of pure titanium,
whereby the sensor device comprises two cylindrical sensing coils (7a, 7b) which are arranged in parallel with one another and so as to be mutually spaced on a circle that is concentric with the axis of rotation (5) of the impeller (4),
whereby the diameter of the sensing coils (7a, 7b) is between 50 and 75 percent of the radius of the impeller (4).

2. Flowmeter according to claim 1, **characterised in that** the modulator segment (10) consists of titanium sheet metal having a thickness of from 0.08 to 0.50 mm, preferably approximately 0.1 mm.

3. Flowmeter according to any one of the preceding claims, **characterised in that** the modulator segment (10) sits in a shallow recess (11) in the upper face of the impeller (4).

4. Flowmeter according to any one of the preceding claims, **characterised in that** the modulator segment (10) is formed concentrically with the axis of rotation (5) of the impeller (4) in the shape of a semicircle.

## Revendications

1. Débitmètre, comprenant
une chambre de mesure (3) qui est parcourue par un fluide,
une roue à pales (4) agencée rotative dans la chambre de mesure (3) et qui est entraînée par le fluide en circulation,
un dispositif formant capteur, muni d'un circuit électrique oscillant qui contient au moins une bobine de balayage (7a),
au moins un segment de modulateur qui est agencé sur le moyeu (8) de la roue à pales (4) et qui induit un amortissement du circuit oscillant en fonction de l'angle de rotation,
dans lequel le segment de modulateur (10) est un morceau de tôle plat et nu en titane pur,
dans lequel le dispositif formant capteur comprend deux bobines de balayage (7a, 7b) de forme cylindrique qui sont agencées de manière parallèle l'une à côté de l'autre et avec une distance mutuelle sur un cercle concentrique par rapport à l'axe de rotation (5) de la roue à pales (4),
dans lequel le diamètre des bobines de balayage (7a, 7b) représente entre 50 et 75 pour cent du rayon de la roue à pales (4).

2. Débitmètre selon la revendication 1, **caractérisé en ce que** le segment de modulateur (10) est constitué d'une tôle de titane présentant une épaisseur comprise entre 0,08 et 0,50 mm, de manière préférée d'environ 0,1 mm.

3. Débitmètre selon l'une quelconque des revendications précédentes, **caractérisé en ce que** le segment de modulateur (10) se trouve dans un renfoncement plat (11) situé du côté supérieur de la roue à pales (4).

4. Débitmètre selon l'une quelconque des revendications précédentes, **caractérisé en ce que** le segment de modulateur (10) est réalisé sous une forme semi-circulaire de manière concentrique par rapport à l'axe de rotation (5) de la roue à pales (4).
